(19) Europäisches Patentamt / European Patent Office / Office européen des brevets

(11) **EP 1 738 135 B1**

(12) **FASCICULE DE BREVET EUROPEEN**

(45) Date de publication et mention de la délivrance du brevet:
**19.05.2010 Bulletin 2010/20**

(21) Numéro de dépôt: **05742653.8**

(22) Date de dépôt: **16.03.2005**

(51) Int Cl.:
*G01B 11/02* $^{(2006.01)}$    *B25J 9/16* $^{(2006.01)}$

(86) Numéro de dépôt international:
**PCT/FR2005/000643**

(87) Numéro de publication internationale:
**WO 2005/111536 (24.11.2005 Gazette 2005/47)**

(54) **PROCEDE ET DISPOSITIF DE DETECTION EN HYPERACUITE D'UN BORD CONTRASTE SENSIBLEMENT RECTILIGNE ET SYSTEME DE FIXATION ET DE POURSUITE FINE DE CE BORD CONTRASTE.**

VERFAHREN UND EINRICHTUNG ZUR HYPERAKUTEN DETEKTION EINES IM WESENTLICHEN RECHTECKIGEN KONTRASTRANDS UND SYSTEM ZUR FEIN-BEFOLGUNG UND FIXIERUNG DES KONTRASTRANDS

METHOD AND DEVICE FOR HYPERACUTE DETECTION OF AN ESSENTIALLY RECTILINEAR CONTRAST EDGE AND SYSTEM FOR FINE FOLLOWING AND FIXING OF SAID CONTRAST EDGE

(84) Etats contractants désignés:
**AT BE BG CH CY CZ DE DK EE ES FI FR GB GR HU IE IS IT LI LT LU MC NL PL PT RO SE SI SK TR**

(30) Priorité: **23.04.2004 FR 0404352**

(43) Date de publication de la demande:
**03.01.2007 Bulletin 2007/01**

(73) Titulaire: **CENTRE NATIONAL DE LA RECHERCHE SCIENTIFIQUE (CNRS)**
**75016 Paris (FR)**

(72) Inventeurs:
- **FRANCESCHINI, Nicolas**
  **F-13009 MARSEILLE (FR)**
- **VIOLLET, Stéphane**
  **13009 Marseille (FR)**
- **BOYRON, Marc**
  **F-13003 MARSEILLE (FR)**

(74) Mandataire: **Domenego, Bertrand**
**Cabinet Lavoix**
**2, place d'Estienne d'Orves**
**75441 Paris Cedex 09 (FR)**

(56) Documents cités:
- **VIOLLET S ET AL: "Visual servo system based on a biologically inspired scanning sensor" PROCEEDINGS OF THE SPIE - THE INTERNATIONAL SOCIETY FOR OPTICAL ENGINEERING SPIE-INT. SOC. OPT. ENG USA, vol. 3839, 19 septembre 1999 (1999-09-19), pages 144-155, XP002312064 ISSN: 0277-786X**
- **VIOLLET S ET AL: "Super-accurate visual control of an aerial minirobot" AUTONOMOUS MINIROBOTS FOR RESEARCH AND EDUTAINMENT. AMIRE2001. PROCEEDINGS OF THE 5TH HEINZ NIXDORF SYMPOSIUM HEINZ NIXDORF INST., UNIV. PADERBORN PADERBORN, GERMANY, 22 octobre 2001 (2001-10-22), - 25 octobre 2001 (2001-10-25) pages 215-224, XP001152416 ISBN: 3-935433-06-9**

**Description**

L'invention concerne un procédé et un dispositif de détection optique en hyperacuité d'un bord contrasté sensiblement rectiligne et un système d'acquisition et de poursuite d'une cible comportant au moins un tel bord contrasté.

Dans le domaine technique relatif à l'imagerie, une solution permettant d'obtenir un capteur d'images à très haute résolution consiste à associer un capteur à haute densité de pixels à une optique adéquate. Outre un encombrement important cette solution présente un coût très élevé.

Une autre solution consiste à déplacer un capteur d'image par micro-pas de déplacement, sous-multiples de l'espacement entre les pixels de ce dernier, et à reconstituer une image finale à partir des images partielles acquises à chaque micro-déplacement. Une telle solution implique l'utilisation d'une mémoire de stockage de grande capacité, ainsi qu'un algorithme de reconstruction d'image particulièrement performant, et donc coûteux en termes de temps et de ressources de calcul.

Dans le domaine technique connexe relatif à la détection d'horizon, pour le pilotage automatique et la stabilisation d'un navire ou d'un aéronef, outre les techniques mettant en oeuvre des centrales inertielles, des techniques de détection optique ont été proposées. Les techniques de détection optique précitées consistent, essentiellement, à mesurer une différence d'intensité du rayonnement infrarouge et/ou visible entre le ciel et le sol.

D'autres systèmes expérimentaux ont en outre été proposés. Ce type de système met en oeuvre un capteur CCD et un algorithme de traitement d'image pour en extraire l'horizon avec une précision convenable. Toutefois, un tel système exige une luminance élevée et requiert une puissance de calcul importante.

Dans le domaine de la détection d'obstacles, tels que des câbles en acier, objets de faible dimension à distance relativement grande, une détection par ondes électromagnétiques, ondes radar, est mise en oeuvre.

Les radars à ondes millimétriques sont capables de détecter un câble en acier de 6 mm de diamètre à une distance de 25 m environ et les radars à bande ultra large sont capables de détecter un câble d'acier de même diamètre à une distance d'environ 80 m.

Dans le même domaine, les techniques mettant en oeuvre un laser à balayage permettent de détecter un câble de diamètre comparable jusqu'à une distance limitée toutefois à 6 m. Les détecteurs à laser à balayage correspondants sont volumineux, encombrants et lourds, de 6 à 8 kg.

Plus récemment, une technique de détection par un oeit électronique, soumis à un micro-balayage en rotation par rapport à un bord contrasté sensiblement rectiligne a été décrite par Stéphane VIOLLET et Nicolas FRANCESCHINI, Equipe Microrobotique UMR Mouvement et Perception, CNRS / Université de la Méditerrannée 31, Chemin Joseph Aiguier 13402 Marseille Cedex 20, lors de la tenue des Cinquièmes journées du pole microrobotique et Premières journées du RTP microrobotique des 6 et 7 novembre 2002, Rennes, Irisa et ENS Cachan, Antenne de Bretagne, France.

L'article publié, issu de ces journées et désigné $A_1$, décrit la conception et la réalisation d'un type spécifique de capteur visuel dit "neuromimétique", les principes de mise en oeuvre de ce dernier étant directement inspirés du monde du vivant. Ce capteur, désigné OSCAR, pour (Optical Scanner for the Control of Autonomous Robots) permet de déterminer la position angulaire d'un contraste présentant un bord sensiblement rectiligne, au moyen de deux photodiodes décalées spatialement, auxquelles on impose un microbalayage périodique en rotation, inspiré d'observations faites sur la rétine de la mouche en vol.

La mesure du mouvement relatif de l'environnement visuel, c'est-à-dire du bord sensiblement rectiligne, est effectuée par l'intermédiaire d'un circuit Détecteur Elémentaire de Mouvement, circuit DEM, dont le principe de mise en oeuvre et de fonctionnement est inspiré de celui des neurones détecteurs de mouvement de la mouche.

Pour un balayage en rotation à vitesse variable, le signal délivré par le circuit DEM, à partir des deux photodiodes, est un signal dont l'amplitude dépend de la position angulaire du bord contrasté par rapport à la direction moyenne du champ de vision global du capteur, formé par les deux photodiodes.

Pour une description plus complète de ce capteur OSCAR, on pourra utilement se reporter à l'article $A_1$ publié, issu de ces deux journées.

En référence à ce même article, on indique que ce même capteur permet notamment d'obtenir :

- une acuité bien plus fine que l'angle $\Delta\varphi$ séparant les axes visuels, axes de sensibilité maximale des deux photodiodes, définissant l'angle de vision global du capteur, un tel capteur réagissant à une rotation aussi faible que 2,5% de l'angle $\Delta\varphi$ ;
- un *minimum visible* bien plus fin que ce même angle $\Delta\varphi$, un tel capteur détectant sans difficulté une barre noire de largeur 1 cm à une distance de 200 cm, cette dernière ne sous-tendant qu'un angle de 0,28˚, soit un angle représentant 7,8% de cet angle de vision global $\Delta\varphi$.

Un tel capteur présente des performances d'acuité visuelle suffisante afin de permettre l'intégration de ce dernier dans une boucle d'asservissement visuo-motrice, le gain statique du capteur variant, en outre, peu en fonction de la nature de l'objet, de son contraste ou de sa distance.

La présente invention a pour objet la mise en oeuvre d'un procédé et d'un dispositif de détection en hyperacuité d'un bord contrasté sensiblement rectiligne, basés sur un principe semblable mais grâce auxquels tant l'encombrement que la masse, l'inertie et la puissance consommée du dispositif de détection sont sensiblement réduits, vis-à-vis du capteur OSCAR de l'art antérieur, et qui permet d'améliorer de façon particulièrement significative la fiabilité, au sens de la répétitivité de l'opération de balayage, du dispositif de détection en hyperacuité objet de l'invention.

Un autre objet de la présente invention est, également, la mise en oeuvre d'un système de fixation et de poursuite fine d'une cible comportant au moins un bord contrasté, présentant une zone de transition lumineuse sensiblement rectiligne, permettant d'assurer le contrôle et la stabilisation de la direction de visée d'un dispositif de détection en hyperacuité conforme à l'objet de l'invention, système dont les performances sont comparables, au moins qualitativement, à celles du processus VOR, pour Vestibulo Ocular Reflex, c'est-à-dire "Réflexe vestibulo oculaire" connu pour stabiliser l'oeil donc la ligne de visée du regard humain, grâce à la combinaison, d'une part, du procédé de détection en hyperacuité, objet de l'invention, et, d'autre part, d'une commande particulièrement rapide inspirée du processus VOR précité.

La présente invention a enfin pour objet toute application du procédé, du dispositif de détection d'un bord contrasté, objets de l'invention, ainsi que du système de fixation et de poursuite fine d'une cible, notamment,

- détection et localisation d'horizon pour la stabilisation d'un aéronef, d'un engin spatial, marin ou aérien ;
- détection de câbles, poteaux, rails et autres obstacles minces ou filiformes par un aéronef ou autre véhicule ;
- aide à la stabilisation et/ou à la navigation d'un engin volant tel qu'un hélicoptère piloté ou télépiloté en environnement étroit ;
- aide à la maintenance de lignes électriques à haute tension, lignes téléphoniques ou autres, par mise en oeuvre sur un engin aérien ou autre piloté ou télépiloté d'une boucle visuo-motrice de grande précision et de grande stabilité ;
- stabilisation, par détection optique, d'un aéronef en vol libre ou captif vis-à-vis d'une cible fixe placée au sol ;
- stabilisation d'une plateforme par rapport à des repères optiques fixes (supports d'instruments ou de machines, plateforme marine ou autre) ;
- stabilisation d'un capteur d'image (caméra, appareil photo) ;
- micro-positionnement différentiel de haute précision d'objets présentant un contraste mono ou bidimensionnel tels que des masques optiques, pour la détection de micro défauts ou autres ;
- théodolite passif, pour structure à contraste très éloignée ;
- détection à grande distance de mouvement de très faible amplitude, notamment d'intrus pénétrant dans une enceinte protégée ;
- poursuite optique d'agents (aéronefs, oiseaux...) par une caméra ou un appareil photo ;
- aide à la navigation par détection d'obstacles proches de la direction de déplacement, notamment en robotique terrestre, aérienne, spatiale et/ou sous-marine.

L'invention a donc pour objet un procédé et un dispositif de détection d'un bord contrasté conforme, respectivement, aux revendications 1 et 15.

Le procédé et le dispositif de détection d'un bord contrasté objets de la présente invention trouvent application à la mise en oeuvre industrielle de systèmes de fixation et de poursuite fine d'une cible présentant au moins un bord contrasté, dans lesquels un procédé de compensation de la ligne de visée semblable au processus VOR du regard humain est susceptible d'être mis en oeuvre, en raison tant du caractère de haute précision et de grande rapidité de ce procédé et de ce dispositif que du caractère de haute miniaturisation et d'extrême légèreté de ce dispositif, dont l'inertie très faible autorise une telle mise en oeuvre de manière particulièrement remarquable.

Une description plus détaillée du procédé et du dispositif de détection d'un bord contrasté et d'un système de fixation et de poursuite fine d'une cible comportant au moins un bord contrasté, objets de l'invention, sera maintenant donnée en liaison avec les dessins ci-après dans lesquels :

- la figure 1 représente, à titre illustratif, un schéma de principe de mise en oeuvre du procédé de détection d'un bord contrasté objet de la présente invention ;

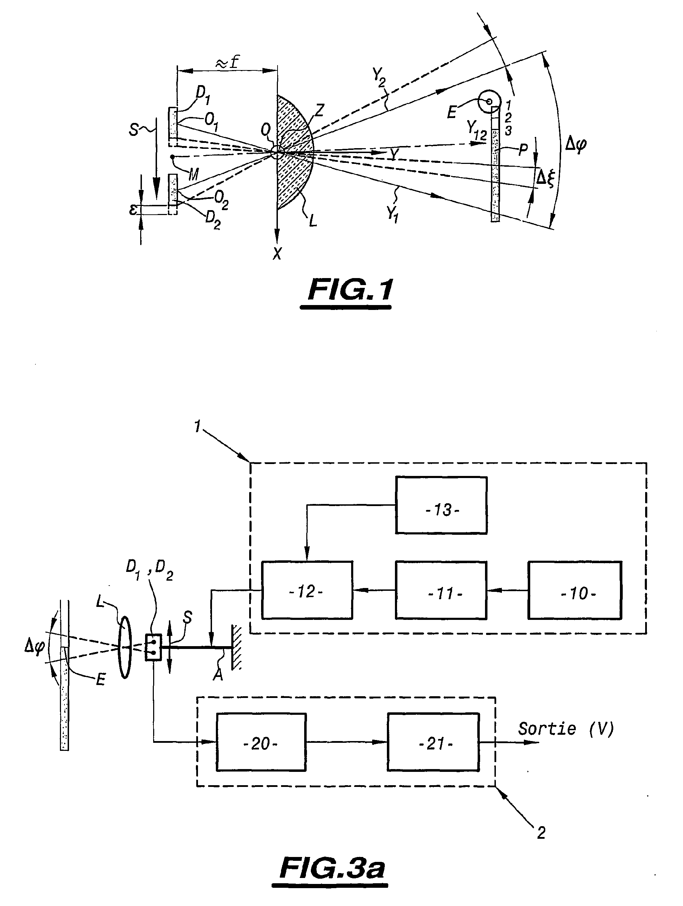

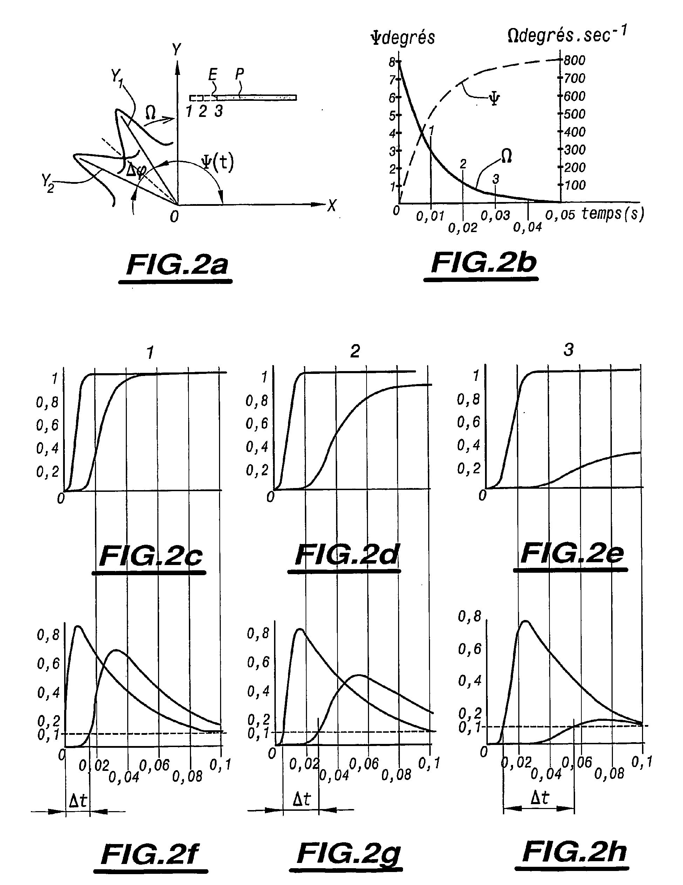

- les figures 2a à 2h représentent, à titre illustratif, différentes sous-étapes de mise en oeuvre du procédé représenté en figure 1, ces sous-étapes permettant, notamment, d'assurer la détection par rapport à une direction moyenne, de la position angulaire de la zone de transition lumineuse du bord contrasté, à partir de la loi de balayage et de l'écart temporel $\Delta t$ fonction de la position angulaire relative du premier et du deuxième capteur optique vis-à-vis de la zone de contraste lumineux, ce retard temporel traduisant le désalignement de la direction moyenne d'observation du premier et du deuxième capteur optique par rapport à cette zone de transition lumineuse ;

- la figure 3a représente, à titre illustratif, un schéma fonctionnel d'un dispositif de détection d'un bord contrasté conforme à l'objet de la présente invention ;

- la figure 3b donne un exemple de caractéristiques statiques entrée/sortie (en volts par degré) du détecteur selon l'invention, obtenues devant un bord contrasté ($C_1$) respectivement une barre noire ($C_2$) de largeur 1 cm tous deux placés à 130 cm de ce détecteur ;
- les figures 4a, 4b, 4c, 4d et 4e représentent, à titre illustratif, des exemples de mise en oeuvre spécifique d'un dispositif de détection, tel que représenté en figure 3a, respectivement une première, une deuxième, une troisième, une quatrième et une cinquième variante de mise en oeuvre de ce dernier ;
- les figures 5a et 5b représentent, à titre d'exemple non limitatif, une première et une deuxième variante de mise en oeuvre non limitative du dispositif de détection objet de l'invention, dans lesquels la direction du balayage en translation appliquée aux capteurs optiques peut être ajustée dans une direction sensiblement perpendiculaire au bord contrasté, en vue d'une application spécifique ;
- les figures 6a et 6b représentent, à titre d'exemple non limitatif, deux autres variantes de mise en oeuvre du dispositif de détection objet de l'invention plus particulièrement utilisables pour un balayage bidimensionnel et applicables à des cibles bidimensionnelles ;
- la figure 7a représente une vue de dessus de la partie d'un système de fixation visuelle et de poursuite fine, permettant de définir les paramètres de fonctionnement de ce dernier, dans le cadre du système de fixation visuelle et de poursuite fine représenté sur la figure précitée ;
- la figure 7b représente, à titre illustratif, un schéma fonctionnel global d'un système de fixation visuelle et de poursuite fine, pour les paramètres ou variables d'état représentés en figure 7a, lorsque le dispositif de détection incorpore le système de fixation visuelle et de poursuite fine d'une cible, et que le processus de fixation visuelle et de poursuite fine est assisté par un second système correspondant sensiblement au processus VOR de stabilisation de la ligne d'observation du regard humain.

Une description plus détaillée du procédé de détection d'un bord contrasté présentant une zone de contraste lumineux sensiblement rectiligne dans une direction déterminée, conforme à l'objet de la présente invention, sera maintenant donnée en liaison avec la figure 1 et les figures suivantes.

En référence à la figure 1 précitée, on indique que la zone de contraste lumineux, zone de transition lumineuse, et, en particulier, le bord contrasté sont rectilignes dans une direction sensiblement orthogonale au plan de la feuille contenant la figure 1, la direction déterminée étant par exemple celle du bord E d'une plaque P représentée ici aux positions successives 1, 2 et 3.

Le procédé objet de l'invention consiste au moins à effectuer dans une autre direction transversale à la direction déterminée correspondant au bord E de la plaque P, un balayage périodique de position angulaire de l'angle de vision global $\Delta\varphi$ d'un premier et d'un deuxième capteur optique notés $D_1$ et $D_2$.

En référence à la figure 1, on comprend que le balayage périodique de position de l'angle de vision global s'entend un balayage angulaire de cette position dans le plan de la figure 1, l'angle de vision global étant donné par deux directions $O_1Y_1$ de l'axe de visée du premier capteur optique $D_1$ et $O_2Y_2$ de l'axe de visée du deuxième capteur optique $D_2$.

Dans un mode de mise en oeuvre non limitatif, on indique que cet angle de vision global peut être formé par l'intermédiaire d'une lentille convergente L, les capteurs optiques $D_1$ et $D_2$ étant alors placés sensiblement dans le plan focal image de la lentille L précitée.

Selon un aspect particulièrement remarquable du procédé objet de l'invention, le balayage périodique de position de l'angle de vision global $\Delta\varphi$ est effectué par translation relative de l'ensemble formé par le premier et le deuxième capteur optique $D_1$ et $D_2$ et de la lentille L dans cette autre direction, cette autre direction étant, sur la figure 1, contenue dans le plan contenant cette figure. Le balayage par translation est noté S et représenté par une flèche.

La loi de balayage périodique correspond à un balayage non uniforme pendant une partie au moins de chaque période de balayage périodique, l'angle de vision global noté $\Delta\varphi = (O_1Y_1, O_2Y_2)$ étant alors délimité par la direction moyenne d'observation du premier et du deuxième capteur optique $D_1$, $D_2$.

Le procédé objet de l'invention consiste également à détecter l'écart temporel entre les signaux délivrés par le premier et le deuxième capteur optique $D_1$ et $D_2$, écart temporel $\Delta t$ qui est lié à la position angulaire de la zone de transition lumineuse, c'est-à-dire du bord E de la plaque P, par rapport à une direction de référence. La direction de référence est avantageusement la direction $MOY_{12}$ correspondant sensiblement à la direction temporelle moyenne de la bissectrice entre les directions de visée du premier et du deuxième capteur optique $D_1$, $D_2$.

Ainsi, un déplacement linéaire d'amplitude s appliquée à l'ensemble formé, par exemple, par le premier et le deuxième capteur optique $D_1$ et $D_2$ selon le balayage en translation S provoque la rotation de l'angle de vision global $\Delta\varphi$ et fait tourner d'un angle $\Delta\xi$ les directions d'observation $OY_1$, $OY_2$.

Le processus de mesure de l'écart temporel $\Delta t$ précité image de la position angulaire de la zone de contraste lumineux E par rapport à la direction de référence $MOY_{12}$, à partir de la loi de balayage $\Omega$ sera maintenant décrit en liaison avec les figures 2a à 2h.

Sur la figure 2a, on a représenté le processus de balayage périodique de position angulaire de l'angle de vision

global $\Delta\varphi$. En particulier, on notera que l'angle de vision global précité est délimité par les directions $OY_1$ et $OY_2$ correspondant au maximum de sensibilité de chacun des capteurs optiques $D_1$ et $D_2$, les courbes de sensibilité de ces derniers dans le plan OX,OY, plan de la figure 1, correspondant de manière classique à des courbes en cloche.

Dans la figure 2a précitée, la plaque P occupe les positions 1, 2 ou 3 de la figure 1, positions choisies arbitrairement pour les besoins de l'explication du processus expliqué ci-après.

Le balayage à vitesse angulaire $\Omega$ variable par l'angle de vision global $\Delta\varphi$ du bord contrasté E présentant la zone de contraste lumineux sensiblement rectiligne et parallèle à l'axe OX, sur la figure 2a, ce bord contrasté étant situé en position 1, 2 ou 3 sur la figure précitée, a pour effet que la vitesse angulaire $\Omega(t)$ de balayage de l'angle de vision global et représentée par $1/\Delta t$ mesurée par le couple de capteurs optiques $D_1$ et $D_2$ est différente selon que le bord contrasté E de la plaque P est situé en position 1, 2 ou 3.

Sur la figure 2b, on a représenté une loi de balayage périodique correspondant à un balayage non uniforme dans le temps, la loi de balayage $\Omega$ en fonction du temps étant représentée en figure 2b, ainsi que l'angle $\psi$, en fonction du temps, d'une direction $OY_1$ délimitant l'angle de vision global, l'axe des abscisses de la figure 2b étant gradué en secondes et l'axe des ordonnées pour la loi de balayage $\Omega$ étant gradué en degrés.s$^{-1}$ respectivement en degrés pour l'angle $\psi$.

Les figures 2c, 2d et 2e représentent les signaux de sortie délivrés par les capteurs optiques $D_1$ et $D_2$, selon la position du bord contrasté E au cours de l'opération de balayage pour les positions 1, 2 et 3 représentées en figure 1, 2a ou 2b.

Les signaux de sortie précités sont alors avantageusement filtrés par l'intermédiaire d'un filtre passe-haut d'ordre 1, lequel permet d'effectuer un seuillage des signaux précédemment cités et ainsi de mesurer l'écart temporel $\Delta t$, ainsi que représenté respectivement aux figures 2f, 2g et 2h pour les positions 1, 2, respectivement 3 correspondant aux figures 2c, 2d, 2e.

Le résultat essentiel est que l'écart temporel $\Delta t$ entre les signaux filtrés délivrés par les capteurs $D_1$ et $D_2$ varie selon la position 1, 2, 3 du bord contrasté E : le processus permet de coder une position angulaire par un écart temporel.

L'axe des abscisses des figures 2c à 2h est gradué en temps, c'est-à-dire en secondes, et l'axe des ordonnées est gradué en amplitude relative de 0 à 1 du signal délivré par les détecteurs optiques $D_1$ respectivement $D_2$ ou par le processus de filtrage pour les figures 2f à 2h.

On comprend bien sûr que, pour la mise en oeuvre du procédé objet de l'invention, il est possible d'exécuter le balayage en translation S de l'ensemble formé par le premier $D_1$ et le deuxième $D_2$ capteur optique vis-à-vis de la lentille L et que, réciproquement, cette étape de balayage périodique de position peut correspondre avantageusement à effectuer une translation de la lentille de même amplitude mais de sens opposé devant le premier et le deuxième capteur optique $D_1$ et $D_2$ maintenus fixes.

Dans ces conditions, on comprend que les lois de retard $\Delta t$ entre les signaux délivrés par le premier et le deuxième capteur optique $D_1$ et $D_2$, tel que représenté en figure 2c à 2e, pour la loi de balayage $\Omega$, représentée en figure 2a ou 2b, s'entendent d'un balayage périodique effectué autour de la direction de référence $MOY_{12}$, ainsi que représenté en figure 1.

De préférence, de manière non limitative, la direction du bord contrasté E orthogonale au plan de la figure 1 et de la figure 2a et la direction transversale dans laquelle le balayage de position angulaire de l'angle de vision global, correspondant sensiblement à la direction OX des figures 1 et 2a, sont orthogonales.

En ce qui concerne la mise en oeuvre du processus de mesure du retard $\Delta t$, ainsi que représenté en liaison avec les figures 2a à 2h, on indique que ce processus de mesure peut être mis en oeuvre, de manière non limitative, conformément à un dispositif de détection de l'art antérieur, tel que décrit dans l'article, désigné $A_2$, intitulé "Visual Servo System based on a biologically-inspired Scanning Sensor" publié par Stéphane VIOLLET et Nicolas FRANCESCHINI, CNRS Laboratoire de Neurobiologie, LNB 3, 31 chemin Joseph Aiguier 13402 MARSEILLE CEDEX France, édité par SPIE Conference on Sensor Fusion and Decentralised Control in Robotic Systems II, Boston, Massachussetts, September 1999 : SPIE Vol. 3839. 0277-78 6X/99.

En effet, on comprend que, conformément à un processus particulièrement avantageux de mise en oeuvre du procédé objet de la présente invention, le balayage en translation, soit de l'ensemble formé par le premier et le deuxième capteur optique $D_1$ et $D_2$, soit au contraire de la lentille L vis-à-vis de ces derniers, lorsque ces derniers sont fixes, permet d'effectuer une loi de balayage de position angulaire de l'angle de vision global $\Delta\varphi$, selon une position angulaire de ce dernier, correspondant par exemple à la loi de balayage angulaire de l'ensemble formé par le premier et le deuxième capteur $D_1$ et $D_2$ et par la lentille L, ainsi que décrit dans le document $A_2$ précité.

Par contre, et selon un aspect remarquable du procédé objet de la présente invention, le processus de traitement, pour un balayage de position angulaire, peut alors être sensiblement identique à celui décrit dans l'article précité, bien que le balayage décrit dans ce dernier soit obtenu par rotation globale de l'ensemble lentille + capteurs optiques $D_1$, $D_2$.

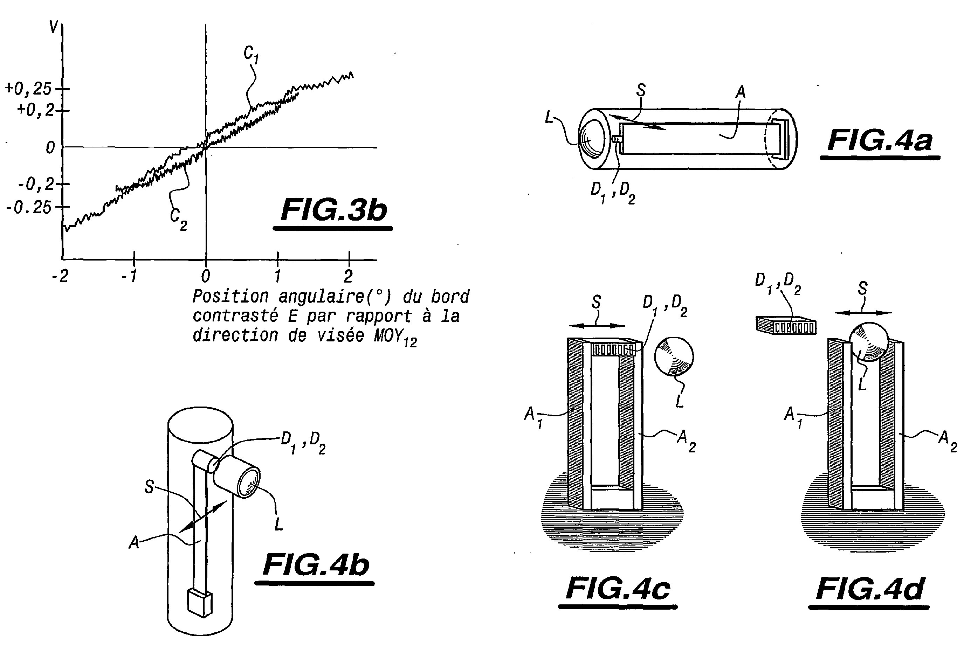

Une description plus détaillée d'un dispositif de détection d'un bord contrasté, présentant une zone de contraste lumineux sensiblement rectiligne dans une direction déterminée conforme à l'objet de la présente invention, sera maintenant donnée en liaison avec les figures 3a, 3b et les figures suivantes.

Bien entendu, le dispositif objet de l'invention comporte au moins le premier et le deuxième capteur optique $D_1$ et $D_2$ de la figure 1, lequel présente l'angle de vision global $\Delta\varphi$, tel que précédemment défini, et une lentille L présentant un centre optique O.

Le premier et le deuxième capteur optique $D_1$ et $D_2$ sont placés sensiblement dans le plan focal image de la lentille L, les directions moyennes d'observation du premier et du deuxième capteur optique $D_1$ et $D_2$ correspondant sensiblement à une ligne $(O_1OY_1, O_2OY_2)$ reliant le centre du premier respectivement du deuxième capteur optique et le centre optique de la lentille L, ainsi que représenté en particulier en figure 1.

Ainsi qu'on l'a représenté sur la figure 3a, le dispositif objet de l'invention comporte en outre des ressources de déplacement relatif en translation de l'ensemble formé par le premier et le deuxième capteur optique $D_1$, $D_2$ par rapport à la zone de contraste lumineux, c'est-à-dire la zone visée dans une autre direction transversale à la direction déterminée du bord contrasté précité. Ce déplacement est un déplacement selon un balayage angulaire périodique de l'angle de vision global $\Delta\varphi$ précité suivant la loi de balayage angulaire périodique non uniforme pendant une partie au moins de chaque période de balayage, loi de balayage $\Omega$ telle que représentée en figures 2a et 2b, répétée périodiquement.

Les ressources de déplacement relatif en translation sont notées A et 1 sur la figure 3a. En outre, le dispositif de détection d'un bord contrasté objet de l'invention comprend un circuit de détection 2, mesurant à partir des signaux délivrés par le premier et le deuxième capteur optique $D_1$ et $D_2$, l'écart temporel $\Delta t$, fonction de la position angulaire de la zone de contraste lumineux, le bord contrasté E, par rapport à une direction de référence, la direction $MOY_{12}$ comprise dans l'angle de vision global $\Delta\varphi$, cette détection étant effectuée à partir de la loi de balayage $\Omega$.

Dans un mode de réalisation non limitatif préférentiel, on indique que le premier et le deuxième capteur optique $D_1$ et $D_2$ sont formés chacun par un capteur photoélectrique, tel qu'une diode photoélectrique, dont la sensibilité spectrale peut être choisie soit dans le domaine visible ou même dans le domaine ultraviolet, soit au contraire dans le domaine infrarouge pour la détection nocturne par exemple.

Le choix de la longueur d'onde de sensibilité maximale des photodiodes précitées peut alors être effectué en fonction de l'application retenue du dispositif de détection de bord contrasté objet de la présente invention.

En ce qui concerne la mise en oeuvre du circuit de détection 2, on indique que celui-ci peut comporter, avantageusement, un amplificateur de séparation 20, encore désigné amplificateur trans-impédance, et un circuit de Détection Elémentaire de Mouvement 21, circuit DEM, recevant les signaux délivrés par le premier et le deuxième capteur optique $D_1$ et $D_2$ après amplification par l'amplificateur séparateur 20 et permettant, à partir du retard temporel $\Delta t$ et de la loi de balayage non uniforme $\Omega$ de délivrer un signal de sortie V sensiblement proportionnel à l'inverse, $\dfrac{1}{\Delta t}$, de l'écart temporel $\Delta t$ et par conséquent sensiblement proportionnel à la position angulaire de la zone de contraste lumineux E par rapport à la direction de référence $MOY_{12}$.

En ce qui concerne la mise en oeuvre du circuit 21 détecteur élémentaire de mouvement, on indique que ce circuit peut correspondre sensiblement au circuit décrit dans l'article $A_2$ précédemment cité édité en 1999 et auquel on pourra se reporter pour une description plus détaillée de ce circuit, en particulier, au chapitre 3 de celui-ci intitulé "Measuring angular speed with an LMD".

Sur la figure 3b, on a représenté le signal de sortie V délivré par le circuit détecteur élémentaire de mouvement 21, l'axe des abscisses de la figure 3b étant gradué en valeurs angulaires positives respectivement négatives de la position angulaire du bord contrasté E par rapport à la ligne de visée $MOY_{12}$ du capteur. L'axe des ordonnées sur la figure 3b est gradué en amplitude relative positive respectivement négative du signal V délivré par le circuit 21.

On constate que la valeur de ce signal est sensiblement linéaire pour des décalages de position angulaire compris entre -2˚ et +2˚.

Une description plus détaillée des ressources de déplacement relatives en translation de l'ensemble formé par le premier et le deuxième capteur optique $D_1$ et $D_2$ ou de la lentille L vis-à-vis de la zone de contraste lumineux E sera maintenant donnée en liaison avec les figure 4a à 4e en référence à la figure 3a.

Ainsi que représenté sur les figures 4a, 4b, par exemple, les ressources de déplacement relatives en translation comportent, lorsque la lentille L est fixe, un élément support déformable A, dont une extrémité est solidaire d'un support mécanique de référence fixe, et dont l'autre extrémité porte le premier et le deuxième capteur optique $D_1$, $D_2$.

Les ressources précitées comportent en outre un circuit d'application sur le support déformable A, formant alors un actionneur, d'une contrainte de commande de déplacement périodique permettant d'engendrer un déplacement périodique en translation dans l'autre direction, la direction de balayage S, de l'ensemble formé par le premier et le deuxième capteur optique $D_1$, $D_2$, selon la loi de balayage par rapport au support mécanique de référence fixe.

Sur les figures 3a, 4a, 4b, 4c et 4d on indique que le support de référence fixe est représenté par des hachures.

De préférence, et ainsi que représenté en figure 4a ou 4b, l'actionneur A supporte l'ensemble des capteurs optiques $D_1$ et $D_2$ à l'une de ses extrémités et l'autre extrémité de ce dernier peut, par exemple, être fixée à la référence mécanique fixe. L'ensemble peut avantageusement être enfermé dans une enceinte tubulaire en carbone, par exemple, l'extrémité frontale de l'enceinte tubulaire comportant la lentille L sur la figure 4a, alors qu'une fenêtre ménagée sur la surface de révolution de l'enceinte tubulaire permet d'accueillir la lentille L, laquelle est alors placée en vis-à-vis des capteurs optiques $D_1$ et $D_2$, ainsi que représenté en figure 4b.

Une description plus détaillée de l'actionneur A permettant d'engendrer le déplacement en translation sera maintenant donnée en liaison avec la figure 4c et la figure 4d, indépendamment de l'application du déplacement relatif à l'ensemble des capteurs optiques $D_1$, $D_2$, respectivement à la lentille L.

De préférence, ainsi que représenté sur les figures 4c et 4d, l'actionneur A peut être formé par deux lames piézoélectriques appariées $A_1$ et $A_2$, lesquelles sont fixées au support fixe à une de leurs extrémités, l'extrémité opposée comportant l'ensemble des capteurs optiques $D_1$, $D_i$,...$D_n$, ainsi que représenté en figure 4c, respectivement la lentille L, ainsi que représenté en figure 4d.

On comprend, en particulier, que les lames piézoélectriques peuvent être constituées de manière non limitative par deux lames piézoélectriques bimorphes ou monomorphes appariées, ou encore par une lame piézoélectrique et une lame ressort, par exemple, ou par des moyens équivalents. Dans ces conditions, l'application d'une tension électrique adaptée conformément à la loi de balayage permet d'effectuer l'application d'une contrainte de commande de déplacement périodique selon la direction de balayage S tel que représenté sur les figures 4c et 4d.

Dans une variante, l'une des deux lames piézoélectriques peut être utilisée comme capteur de position des photodiodes $D_1$, $D_2$, Fig. 4c, ou de la lentille L, Fig. 4d, ce capteur pouvant être alors inclus dans une boucle d'asservissement de position des photodiodes ou de la lentille. Dans le même but un circuit de mesure, par jauges de contraintes, de la position linéaire du premier et du deuxième capteur optique $D_1$, $D_2$ ou de la lentille L, à partir de la déformation du support déformable, peut être avantageusement prévu.

Ainsi que représenté en figure 3a, la ressource 1 permettant l'application d'une contrainte de commande de déplacement peut comporter avantageusement un générateur de balayage 10 délivrant une tension de balayage, un circuit 11 de mise en forme recevant la tension de balayage et délivrant un signal de commande de balayage intermédiaire et un circuit 12 amplificateur haute tension alimenté en tension continue par un générateur haute tension 13, le circuit amplificateur haute tension étant commandé par le signal de commande de balayage intermédiaire délivré par le circuit 11 de mise en forme pour délivrer une tension de commande périodique de déplacement, laquelle est appliquée, bien entendu, à l'actionneur A des figures 4a et 4b et, en particulier, aux lames piézoélectriques $A_1$ et/ou $A_2$ des figures 4c et 4d.

Pour ce qui concerne l'application de la contrainte de commande de déplacement précitée, on indique que cette contrainte de déplacement peut être ramenée à un simple calibrage du déplacement angulaire décrit par l'article $A_2$ édité en 1999. Ainsi que représenté en Figure 1, le déplacement en translation $\xi$ peut être assimilé à la rotation $\Delta\xi$ de l'angle de vision global $\Delta\varphi$ ou du demi-angle de ce dernier donné sensiblement par le rapport de la demi-distance des centres $O_1$ et $O_2$ séparant les capteurs optiques $D_1$ et $D_2$ et la distance focale f de la lentille L.

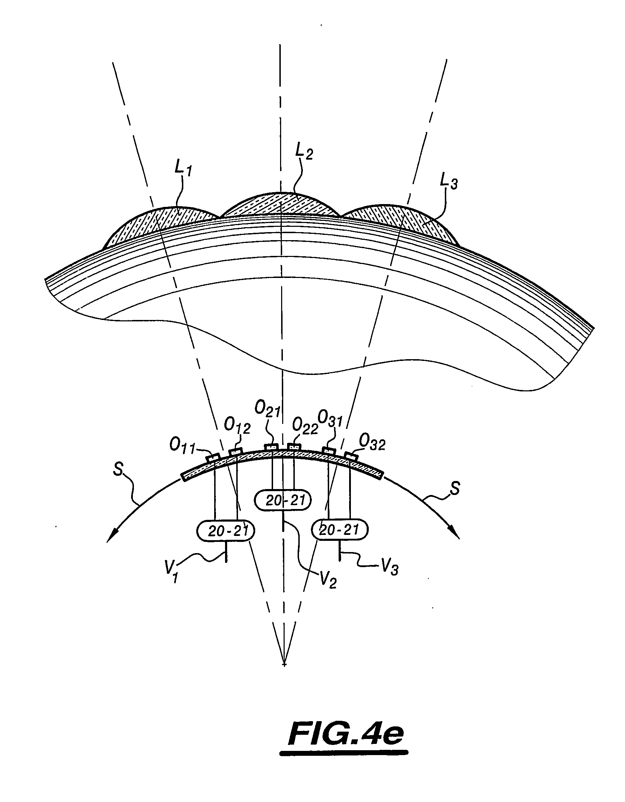

Selon une variante de mise en oeuvre représentée en figure 4e, une pluralité de dispositifs, tel que décrits précédemment en liaison avec les figures précitées, peut être prévue afin d'augmenter le champ de vision global du dispositif de détection jusqu'à la rendre panoramique si nécessaire. Chaque dispositif formant un dispositif élémentaire comporte une lentille fixe, notée $L_1$ à $L_3$, à titre d'exemple non limitatif. Ces dispositifs élémentaires sont agencés sensiblement sur une surface sphérique comportant un centre commun, ce centre commun constituant pour le système d'acquisition le centre optique d'un angle de vision global élargi à l'ensemble des angles de vision global $\Delta\varphi$ de chacun des dispositifs pris ensemble.

Sur la figure 4e précitée, le nombre de dispositifs élémentaires est volontairement limité à 3 afin de ne pas surcharger le dessin.

Dans ces conditions, chaque couple de premier et deuxième capteur $O_{11}$, $O_{12}$ ; $O_{21}$, $O_{22}$ et $O_{31}$, $O_{32}$ pour les lentilles $L_1$, $L_2$ et $L_3$ respectivement, peut alors être connecté à un dispositif de détection de mouvement élémentaire comportant en fait un circuit de détection, symbolisé par 20-21, pour chacun des dispositifs élémentaires considérés. Le signal de sortie délivré par chacun $V_1$, $V_2$ et $V_3$ peut alors être échantillonné pour un traitement numérique subséquent.

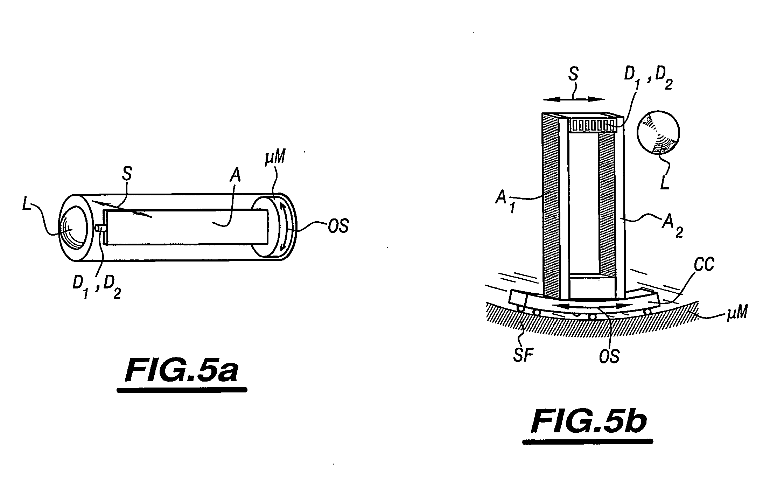

Une description plus détaillée d'un mode de mise en oeuvre particulièrement avantageux du dispositif de détection d'un bord contrasté, conforme à l'objet de la présente invention, sera maintenant donnée en liaison avec les figures 5a et 5b.

D'une manière générale, on rappelle que la direction S, dans laquelle le balayage périodique par translation relative de l'ensemble formé par le premier et le deuxième capteur optique $D_1$, $D_2$ vis-à-vis du bord contrasté E est effectué, peut être a priori quelconque. Toutefois, dans un mode de mise en oeuvre non limitatif, lorsque ce balayage est effectué dans le but d'assurer la détection d'un seul bord contrasté E, cette direction peut avantageusement être perpendiculaire à la direction déterminée dans laquelle s'étend le bord contrasté E.

On indique qu'un tel mode opératoire peut être facilité en orientant la direction de balayage S dans un plan correspondant sensiblement au plan focal de la lentille L.

Dans ce but, et conformément à un mode de mise en oeuvre avantageux du dispositif de détection objet de la présente invention, celui-ci, ainsi que représenté en figures 5a et 5b, comprend avantageusement un dispositif d'orientation de l'ensemble formé par l'élément support déformable A, ou l'ensemble des premier et deuxième capteur optique $D_1$, $D_2$ et le support mécanique de référence fixe. Ce dispositif d'orientation permet alors d'orienter la direction du déplacement périodique en translation S du premier et du deuxième capteur optique $D_1$, $D_2$ dans cette autre direction transversale à la direction déterminée de la zone de contraste lumineux sensiblement rectiligne, le bord contrasté E.

Dans le cas de la figure 5a où la lentille L est frontale par rapport à l'enceinte tubulaire comportant l'ensemble des diodes $D_1$, $D_2$ et l'actionneur A, on indique, ainsi que représenté sur cette figure, que le support peut être constitué par une plate-forme entraînée par un micromoteur $\mu$M, faisant subir à l'ensemble formé par l'actionneur A, les diodes $D_1$ et $D_2$, et bien entendu le support fixe une rotation selon l'axe longitudinal de l'ensemble, représentée par la double flèche OS, dont l'effet est de modifier l'orientation du balayage S.

On comprend ainsi que la direction de balayage S est alors orientée par rapport à la direction non représentée aux dessins du bord contrasté E.

Lorsque, au contraire, l'ensemble formé par les capteurs optiques $D_1$ et $D_2$ est placé vis-à-vis d'une lentille L fixe, ainsi que représenté en figure 5b, l'actionneur A, en particulier lorsqu'il est formé par les actionneurs $A_1$ et $A_2$, solidaires de l'ensemble formé par les diodes $D_1$, $D_2$, ainsi que représenté en figure 5b, peut alors être monté avantageusement sur une couronne circulaire mobile, notée CC, montée sur un roulement à billes dont l'axe est confondu avec celui de L par rapport à un support fixe SF en forme de rail de guidage circulaire, par exemple. L'ensemble de la couronne circulaire CC de l'actionneur A ou $A_1$, $A_2$ et de l'ensemble des diodes $D_1$, $D_2$ en figure 5b peut être alors positionné en orientation par l'intermédiaire d'un micromoteur $\mu$M non représenté aux dessins et délivrant ainsi une nouvelle direction S de balayage.

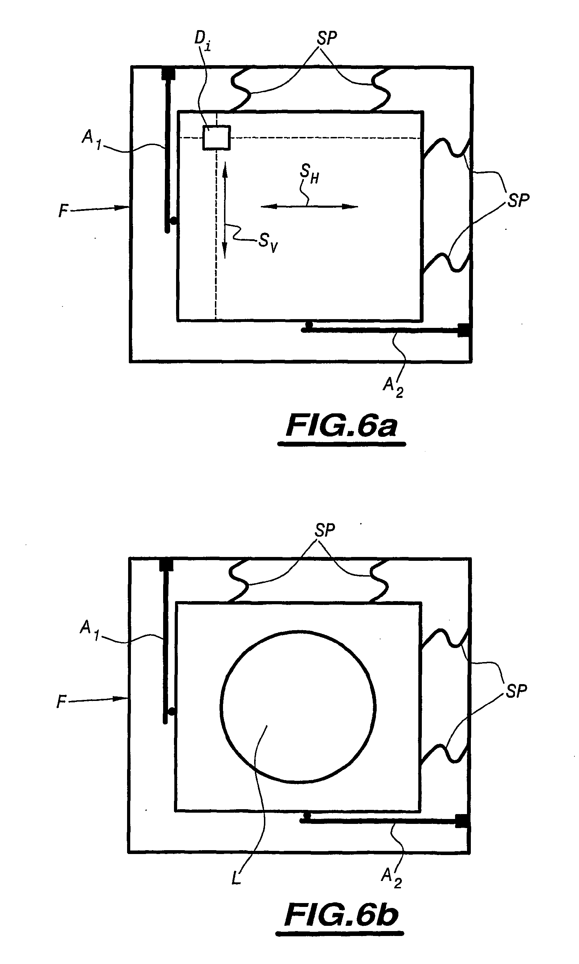

Enfin, pour la détection d'une cible bidimensionnelle comportant au moins deux bords contrastés, le dispositif de détection de bord contrasté objet de la présente invention peut comporter, ainsi que représenté en figure 6a, un premier et un deuxième dispositif de détection, ainsi que décrit précédemment dans la description en liaison avec la figure 4a à 4c, par exemple, le premier et le deuxième capteur optique du premier respectivement du deuxième dispositif de détection et les directions de déplacement relatif périodique de ces derniers étant sensiblement perpendiculaires.

Dans un mode de mise en oeuvre non limitatif tel que représenté en figure 6a et 6b, les deux capteurs optiques $D_1$ et $D_2$ peuvent avantageusement être remplacés par une matrice de détecteurs optiques tel que des photodiodes, chacun constituant un pixel $D_i$, la matrice de diodes rectangulaire ainsi constituée formant une rétine bidimensionnelle.

Dans ces conditions, les deux directions de déplacement relatif périodique sont alors sensiblement perpendiculaires et référencées $S_V$ respectivement $S_H$ sur la figure 6a. La matrice de diodes peut alors être montée dans un cadre F formant un châssis rigide, suspendue par des ressorts SP assurant une suspension suffisante, vis-à-vis du cadre F, pour la matrice de diodes ainsi formée, et les actionneurs sont alors des actionneurs $A_1$ et $A_2$ montés de manière semblable à celle décrite en liaison avec les figures 4a à 4c, par exemple, par l'intermédiaire d'une microbille, pour assurer le balayage dans la direction verticale $S_V$ respectivement horizontale $S_H$.

Un tel agencement peut être réalisé de préférence, ainsi que représenté en figure 6b, en appliquant la contrainte de déplacement à deux dimensions précitées, non pas sur la mosaïque de photodiodes $D_i$ mais sur un cadre supportant la lentille L placée devant une matrice de diodes fixes et se déplaçant ainsi dans un plan perpendiculaire à son axe optique et à distance constante de photodiodes.

Dans ces conditions, pour exécuter le balayage horizontal $S_H$ respectivement vertical $S_V$, et selon un mode spécifique de mise en oeuvre du dispositif de détection objet de la présente invention, on indique que les balayages périodiques vertical respectivement horizontal peuvent être alors exécutés de manière alternée. La détection peut alors être effectuée en synchronisme avec chacun des deux balayages vertical respectivement horizontal.

A titre d'exemple, un détecteur à bord contrasté objet de la présente invention, dans lequel le balayage en rotation de l'angle de vision global des capteurs optiques est obtenu par un balayage en translation rectiligne de deux photodiodes placées sensiblement dans le plan focal d'une lentille de distance focale f = 8,5 mm a donné les résultats ci-après :

| Paramètre | Capteur selon l'invention | |
|---|---|---|
| $\Delta\varphi$ | 4˚ | |
| $\underline{\Delta\alpha}$ (minimum visible) <br> $\Delta\varphi$ | 8% | $\Delta\alpha = 0{,}3˚$ |
| Distance de détection barre noire de largeur 10 mm | 2m | |
| Acuité de la localisation angulaire | 2,5% de $\Delta\varphi$ (0,09˚) | |
| Plage de contraste détectable | 0,1 à 0,8 | |

L'actionneur de type piézoélectrique à bande passante large 500 Hz de faible masse 1,4 g permet d'engendrer une translation d'amplitude aussi grande que 1 mm, en boucle ouverte, avec des temps de réponse faibles.

L'utilisation d'une lentille L de distance focale 50 fois plus grande que celle de 8,5 mm du dispositif détecteur objet de l'invention expérimenté permet de détecter une barre noire de largeur 50 mm telle qu'un câble de ligne électrique à haute tension, à une distance de 500 mètres, ou encore une barre noire de diamètre 100 mm, telle qu'un câble de téléphérique, à une distance d'1 kilomètre.

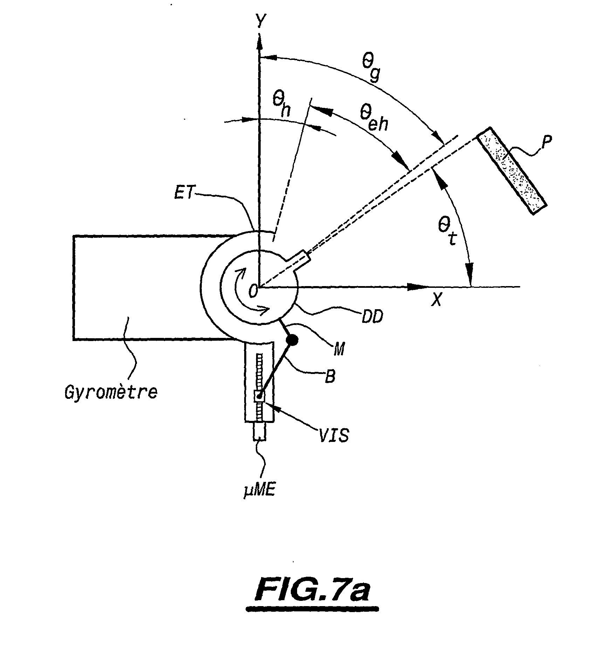

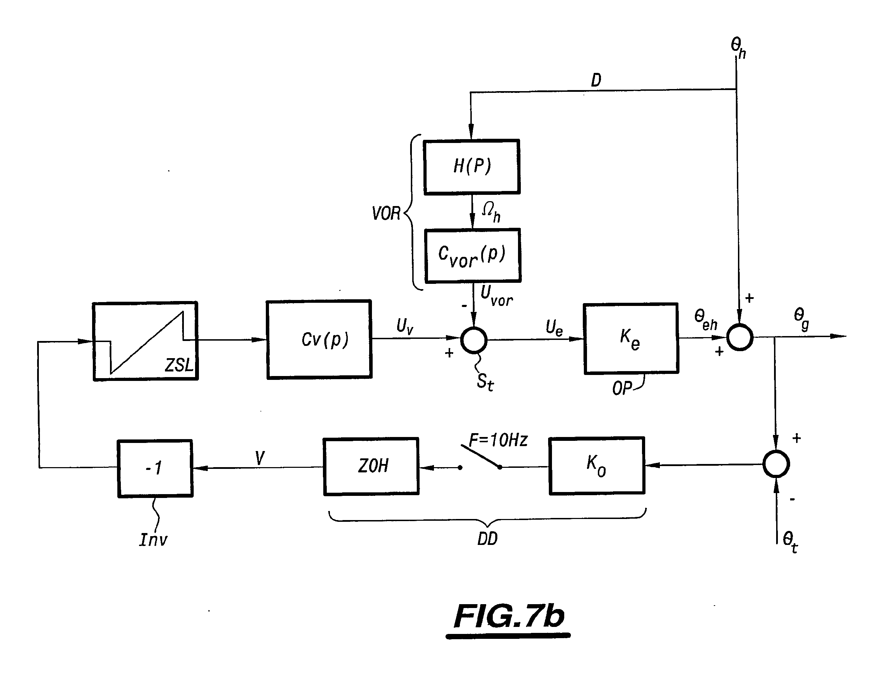

Une description plus détaillée d'un système de fixation et de poursuite fine d'une cible comportant au moins un bord contrasté présentant une zone de contraste lumineux sensiblement rectiligne dans une direction déterminée constitutive de ce bord contrasté E sera maintenant décrite en liaison avec les figures 7a et 7b.

Sur la figure 7a, on a représenté, en vue de dessus, un ensemble constituant un système de stabilisation de la ligne de visée et de poursuite fine d'une cible comportant au moins un bord contrasté E.

Le système précité comprend un dispositif de détection DD, tel que décrit précédemment dans la description en liaison avec les figures 1 à 4e plus particulièrement 4b et un support mécanique ET dans lequel ce dispositif de détection est susceptible d'être orienté.

Sur la figure précitée, ET désigne un carter représentant symboliquement la référence spatiale du crâne humain et le dispositif DD constitue alors une représentation fidèle d'un oeil humain susceptible de se mouvoir dans son orbite. Un micromoteur électronique $\mu$ME permet, par un système d'articulation par vis V bielle B et manivelle M sans jeu, d'assurer une orientation du dispositif de détection DD conforme à l'objet de la présente invention par rapport au carter externe ET et d'assurer un mouvement comparable à celui du globe oculaire dans l'orbite du crâne humain.

La position angulaire du carter ET dans un repère absolu est notée $\theta_h$. La ligne de visée du dispositif de détection DD (axe $MOY_{12}$ de la figure 1) est notée $\theta_{eh}$ par rapport au carter ET et $\theta_g$ par rapport à la direction absolue OY, ce dernier angle correspondant rigoureusement à la somme $\theta_{eh} + \theta_h$. Quant au bord contrasté E, sa position angulaire dans le repère absolu (O, X, Y) est notée $\theta_t$.

En référence à la figure 7a, on comprend qu'une rotation du moteur pas à pas $\mu$ME piloté par le signal de commande $U_e$ entraîne par l'intermédiaire du système vis-bielle-manivelle B, une rotation et une orientation du dispositif de détection DD, libre de tourner à l'intérieur du carter ET. En conséquence, la commande $U_e$ pilotant la position de l'arbre du moteur $\mu$ME contrôle directement l'orientation, donc la ligne de visée (= direction de référence $MOY_{12}$) du dispositif de détection DD.

Le système représenté en figure 7a permet de maintenir constamment la ligne de visée du dispositif de détection DD sur le bord contrasté E, entraînant donc la "fixation" par ce dernier de ce bord contrasté si celui-ci est fixe et sa "poursuite fine" si le bord contrasté est déplacé.

Selon une caractéristique remarquable du système, tout ceci se produit en dépit des perturbations de rotation appliquées sur le support ET. Chez l'homme, la ligne de visée de l'oeil est fréquemment perturbée par les mouvements de la tête. La réjection de ces perturbations est assurée par le réflexe vestibulo-oculaire (VOR). Ce réflexe permet de maintenir la ligne du regard constante malgré les perturbations de rotation engendrées par la tête.

La figure 7b montre le schéma fonctionnel du système de stabilisation de la ligne de visée et de poursuite fine objet de l'invention.

En référence à la figure 7b précitée, on indique que le système objet de l'invention comprend en outre une ressource H(p) de mesure de la vitesse de rotation $\Omega_h$ du support mécanique ET. Cette ressource est avantageusement constituée par un gyromètre, solidaire du carter ET comme l'indique la figure 7a.

Il comprend en outre une ressource de commande directe, à partir d'un signal de commande en boucle ouverte de l'orientation de la direction de référence du dispositif de détection DD, cette ressource délivrant un signal de commande directe $U_{VOR}$ à partir de la mesure de la vitesse de rotation $\Omega_h$ du support mécanique ET.

Il comprend enfin une boucle d'asservissement visuel de la direction de référence $MOY_{12}$ à la direction détectée $\theta_t$ d'au moins un bord contrasté appartenant à la cible. Cette boucle d'asservissement visuel est formée par le dispositif de détection DD, un inverseur Inv, un circuit non linéaire ZSL et un correcteur Cv(p) et délivre le signal de commande $U_v$.

Enfin, une ressource de fusion permet d'obtenir une combinaison linéaire du signal de commande directe $U_{VOR}$, et, du signal de commande $U_v$. En référence à la figure 7b, la ressource de fusion est constituée par un soustracteur St, le signal de commande directe $U_{VOR}$ étant soustrait du signal de commande directe d'asservissement $U_v$.

L'écart entre $\theta_g$ et $\theta_t$ est un signal d'erreur que mesure le dispositif de détection DD. On comprend qu'en fin de compte, la commande $U_e$ du micromoteur électronique $\mu$ME résulte à chaque instant de la différence entre un signal $U_v$ provenant de la boucle d'asservissement visuel basée sur le dispositif de détection DD et un signal $U_{VOR}$ provenant d'un correcteur $C_{VOR}$ ayant pour entrée la vitesse angulaire du carter ET, mesurée au moyen du gyromètre H(p).

La position angulaire $\theta_n$ du carter constitue à la fois :

- une <u>perturbation</u> pour la boucle visuelle, elle-même constituée les fonctions de transfert du dispositif de détection DD, du limiteur non linéaire ZSL et du correcteur Cv(p) = Kv/p ;
- une <u>commande</u> pour la boucle visuelle au travers de la commande Uvor générée par le filtre correcteur $C_{VOR}$.

Une rotation du carter ET entraîne une rotation du dispositif de détection DD et donc une différence angulaire entre $\theta_g$ et $\theta_t$. Cette différence est compensée par le correcteur $C_v$ mais avec une dynamique lente car celle-ci est limitée par la fréquence de balayage du dispositif de détection DD. La boucle visuelle seule ne peut rejeter que des perturbations de rotation ayant une fréquence maximale de 0,4 Hz pour une amplitude de 2°. Pour accélérer la dynamique de réjection de la perturbation $\theta_h$, il a donc été ajouté à la commande $U_v$ associée à une dynamique de réjection très lente, une commande $U_{VOR}$ dont la fonction est de piloter l'orientation du dispositif de détection DD à partir d'une mesure directe de la vitesse angulaire de la perturbation $\theta_h$ (commande directe).

Dans le cas théorique idéal, $C_{VOR}$ est calculé de manière à compenser parfaitement les dynamiques introduite par OP et par H(p) :

$$C_{VOR}(p) = \frac{1}{(H(p)Ke)}$$

En conséquence, dans le cas où Uv=0, on obtient donc :

$$\theta_{eh} = -\theta_h$$

Ceci signifie qu'une rotation du support ET est parfaitement compensée par une rotation du dispositif de détection DD de même amplitude mais de sens opposé.

Cependant la fonction de transfert Cvor(p) ne peut pas être mise en oeuvre directement, en raison d'une stabilité insuffisante. Cette fonction de transfert théorique a en conséquence été approximée par la fonction de transfert suivante :

$$C_{vor}(p) = K\left(\frac{p+a}{bp+1}\right)\left(\frac{-p+c}{p+c}\right)$$ avec K = 0.011, a = 140 rad/s, b = 5 rad/s et c = 0.45 rad/s.

Ce filtre ainsi constitué est formé d'un pseudo-intégrateur mis en cascade avec un filtre passe-tout apportant de la phase négative sans modifier la courbe de gain du pseudo-intégrateur.

En définitive, le système de la figure 7b permet de combiner (fusionner) une boucle visuelle relativement lente, responsable de la fixation et de la poursuite fine d'un bord contrasté, avec une action permettant au dispositif de détection DD de réagir rapidement à des perturbations de rotation appliquées sur le support ET. En d'autres termes, ce système permet de faire cohabiter de manière remarquablement complémentaire, et en combinaison, deux sous-systèmes apportant chacun sa contribution :

- un premier sous-système lent mais précis, car doué d'hyperacuité : la boucle visuelle formée par la boucle d'asservissement basée sur le dispositif de détection DD ;
- un deuxième sous-système rapide mais peu précis (en termes de dérive introduite par le gyromètre) : le système VOR.

La fusion ou combinaison précitée du système dispositif de détection DD, objet de l'invention, avec un système gyrométrique constitue un développement majeur de cette dernière.

Expérimentalement, il a été établi que le système oculomoteur présenté dans la figure 7a est parfaitement capable, grâce à la fusion ou combinaison réalisée, de suivre une cible se déplaçant selon une loi sinusoïdale $\theta_t(t)$ (amplitude 4°, fréquence 0,2 Hz) tout en rejetant une perturbation de rotation $\theta_h$ elle aussi sinusoïdale d'amplitude semblable, 4°, mais de fréquence dix fois plus élevée, 2 Hz).

Des essais du système ainsi modélisé, tel que représenté en figure 7b, ont été effectués en testant la réjection de perturbation de mouvement de la tête, c'est-à-dire du carter externe ET, afin de maintenir une direction de visée fixe impliquant deux types de perturbation appliquées au carter externe ET :

■ Une rotation brusque (échelon de 3°) $\theta_h$, laquelle est répétée rapidement, ou une rotation $\theta_t$, laquelle provoque alors une poursuite fine, ainsi que décrit précédemment dans la description.

Les essais précités ont montré que l'introduction d'une perturbation correspondant à une rotation du carter externe ET d'un angle $\theta_h$ engendre une perturbation pour le correcteur visuel $C_v$ et pour le correcteur $C_{VOR}$. Cette perturbation peut être décomposée en deux parties :

- une partie transitoire correspondant à la réponse inertielle du système VOR dont le temps de réponse est simplement de l'ordre de 10 ms ;
- une partie continue correspondant sensiblement à la réponse visuelle, laquelle supporte un temps de réponse plus long, de l'ordre de 100 ms, avec lequel le dispositif de détection DD opère de manière effective, précise et stable à long terme.

Les essais conduits en laboratoire ont montré que la direction de visée $\theta_g$ reste sensiblement figée dans l'espace, grâce à la mise en oeuvre du système complet dont le schéma fonctionnel est représenté en figure 7b.

Ce mode opératoire peut être comparé de manière particulièrement avantageuse à la compensation de la direction de visée du regard humain. Les essais ont montré que, du fait de la fusion des deux signaux de commande visuel $U_V$ et inertiel $U_{VOR}$ une perturbation de type échelon, d'amplitude 3˚, appliquée sur l'orientation $\theta_h$ du carter externe ET est rejetée à 90% de sa valeur finale en 30 ms.

■ Une deuxième série d'essais a été conduite pour une perturbation correspondant à une perturbation harmonique sensiblement sinusoïdale de l'orientation du carter externe ET, c'est-à-dire de la tête, perturbation appliquée ainsi à l'installation oculomotrice.

Les essais ont alors montré que même en présence d'une perturbation sensiblement sinusoïdale à fréquence rapide à 2 Hz imposée sur le carter externe ET, une telle perturbation est immédiatement compensée par une contre-rotation en opposition de phase du dispositif de détection DD représentant l'oeil, cette compensation ayant pour seul effet de provoquer une légère déviation de l'angle de visée $\theta_g$, la valeur efficace de $\theta_g$ ayant été évaluée à 0,32˚, ce qui est 19 fois plus faible que la perturbation de 6˚ crête à crête appliquée au carter externe ET simulant la tête.

Enfin, des essais de perturbation harmonique appliquée au carter externe ET ont été effectués pour différentes fréquences, la fréquence de ces perturbations ayant été choisie dans une plage de valeurs comprises entre 0,5 et 6 Hz.

Dans ces conditions, la variation de la direction de visée $\theta_g$ n'a jamais dépassé 0,55˚ jusqu'à la fréquence maximale de 6 Hz précitée.

A titre de comparaison, la fréquence maximale des perturbations que la boucle de rétroaction visuelle seule est susceptible de rejeter, c'est-à-dire en l'absence de la combinaison avec la boucle de commande directe VOR, est limitée à 0,4 Hz pour une amplitude de 6˚ crête à crête appliquée au carter.

Les performances du système de stabilisation de la ligne de visée et de poursuite fine d'une cible, objet de la présente invention sont remarquables car le système précité, tel que décrit, est en mesure dans une application à bord d'un hélicoptère en vraie grandeur de compenser le mode fondamental des vibrations à 5 Hz environ introduites par le rotor principal.

On a ainsi décrit un procédé et un dispositif de détection d'un bord contrasté particulièrement performant dans la mesure où le procédé et le dispositif permettent la mise en oeuvre d'un système reproduisant le comportement du regard donc de la ligne de visée de l'oeil de l'homme ou des mammifères supérieurs.

En particulier, le procédé, le dispositif de détection d'un bord contrasté objet de la présente invention et le système correspondant, utilisant ces derniers, sont susceptibles d'applications les plus variées, telles que mentionnées précédemment dans l'introduction à la description.

En particulier, on indique, à titre d'exemple non limitatif, que le dispositif de détection d'un bord contrasté objet de la présente invention, tel que représenté en figures 5a ou 5b, est susceptible d'une application directe à l'aide à la navigation d'aéronefs tel que des hélicoptères, par exemple pilotés ou télépilotés, notamment lorsque ces derniers sont amenés à évoluer en contexte opérationnel difficile et, notamment, en vallée encaissée, en zone urbaine, ou en présence d'objets filiformes tels que les lignes à haute tension.

**Revendications**

1.  Dispositif de détection d'un bord contrasté (E) présentant une zone de transition lumineuse sensiblement rectiligne dans une direction déterminée, ce dispositif comportant :

    au moins un premier et un deuxième capteur optique ($D_1$, $D_2$, $O_{11}$, $O_{12}$ ; $O_{21}$, $O_{22}$, $O_{31}$, $O_{32}$) présentant un angle de vision global ($\Delta\varphi$), délimité par la direction moyenne ($O_1OY_1$, $O_2OY_2$) d'observation de ce premier et de ce deuxième capteur optique, et

       - une lentille (L) présentant un centre optique (O), le premier et le deuxième capteur optique étant placés sensiblement dans le plan focal image de cette lentille et les directions moyennes d'observation ($O_1OY_1$, $O_2OY_2$) du premier et du deuxième capteur optique correspondant sensiblement à une ligne reliant le centre du premier respectivement du deuxième capteur optique et le centre optique (O) de cette lentille, lesdits premier et deuxième capteur optique délivrant des signaux de détection, et

- des moyens (2) de mesure, à partir de ces signaux de détection, de l'écart temporel de ces signaux lié à la position angulaire de cette zone de transition lumineuse, par rapport à une direction de référence comprise dans cet angle de vision global ($\Delta\varphi$) à partir de la loi de balayage, cette direction de référence étant liée à une valeur spécifique de cet écart temporel, **caractérisé en ce que** ledit dispositif comporte en outre :

- des moyens de déplacement (1, A ; $A_1$, $A_2$) relatif en translation soit de l'ensemble, formé par le premier et le deuxième capteur optique vis-à-vis de la lentille (L), soit de la lentille (L) devant l'ensemble formé par le premier et le deuxième capteur optique ($D_1$, $D_2$), dans une autre direction transversale (S) à cette direction déterminée, selon un balayage périodique de position de l'angle de vision global ($\Delta\varphi$) suivant une loi de balayage périodique non uniforme pendant une partie au moins de chaque période de balayage périodique, et

2. Dispositif selon la revendication 1, **caractérisé en ce que** le premier et le deuxième capteur optique ($D_1$, $D_2$) sont formés chacun par un capteur photoélectrique.

3. Dispositif selon la revendication 1 ou 2, **caractérisé en ce que** lesdits moyens (1, A ; $A_1$, $A_2$) de déplacement relatif en translation comportent, ladite lentille (L) étant fixe :

   - un élément support (A) déformable solidaire, d'une part, dudit ensemble formé par le premier et le deuxième capteur optique ($D_1$, $D_2$), et, d'autre part, d'un support mécanique de référence fixe ;
   - des moyens d'application, sur ledit support déformable, d'une contrainte de commande de déplacement périodique permettant d'engendrer un déplacement périodique en translation dans cette autre direction transversale (S) de l'ensemble formé par le premier et le deuxième capteur optique ($D_1$, $D_2$), selon ladite loi de balayage par rapport audit support mécanique de référence fixe;
   - des moyens de mesure de la position linéaire du premier et du deuxième capteur optique ou de la lentille à partir de la déformation du support déformable.

4. Dispositif selon la revendication 1 ou 2, **caractérisé en ce que** lesdits moyens de déplacement relatif en translation comportent, ledit ensemble formé par le premier et le deuxième capteur optique ($D_1$, $D_2$) étant fixe :

   - un élément support déformable solidaire, d'une part, de cette lentille (L), et, d'autre part, d'un support mécanique de référence fixe ;
   - des moyens d'application, sur cet élément support, d'une contrainte de commande de déplacement périodique permettant d'engendrer un déplacement périodique en translation dans cette autre direction de ladite lentille, selon ladite loi de balayage, par rapport audit support mécanique de référence fixe.

5. Dispositif selon la revendication 3 ou 4, **caractérisé en ce que** lesdits moyens d'application d'une contrainte de commande de déplacement comportent au moins :

   - un générateur de balayage (10) délivrant une tension de balayage ;
   - un circuit (11) de mise en forme recevant la tension de balayage et délivrant un signal de commande de balayage intermédiaire, conforme à la loi de balayage non uniforme ;
   - un circuit amplificateur (12), alimenté en tension continue, commandé par ledit signal de commande de balayage intermédiaire et délivrant une tension de commande périodique de déplacement ;
   - un actionneur électromécanique (A, $A_1$, $A_2$) sensible à la tension de commande périodique.

6. Dispositif selon l'une des revendications 1 à 5, **caractérisé en ce que** lesdits moyens de mesure de la position angulaire de la zone de transition lumineuse comportent au moins :

   - un amplificateur séparateur (20) recevant les signaux délivrés par le premier et le deuxième capteur optique et délivrant des signaux amplifiés ;
   - un module détecteur élémentaire (21) de mouvement recevant lesdits signaux amplifiés, permettant, à partir dudit retard temporel et de la loi de balayage non uniforme, de délivrer un signal fonction sensiblement linéaire de la position angulaire de ladite zone de contraste lumineux par rapport à ladite direction de référence.

**7.** Dispositif selon l'une des revendications 1 à 6, **caractérisé en ce que** la direction déterminée et l'autre direction transversale (S) à ladite direction déterminée sont orthogonales.

**8.** Dispositif selon l'une des revendications 1 à 7, **caractérisé en ce que** celui-ci comprend en outre des moyens ($\mu$M ; CC) d'orientation de l'ensemble formé par l'élément support déformable, la lentille ou l'ensemble des premier et deuxième capteur optique, et le support mécanique de référence fixe, de manière à orienter la direction du déplacement périodique en translation de la lentille ou de l'ensemble des capteurs optiques dans cette autre direction transversale à ladite direction déterminée de la zone de transition lumineuse sensiblement rectiligne.

**9.** Dispositif selon l'une des revendications 1 à 8, **caractérisé en ce que** le premier et le deuxième capteur optique sont formés par une matrice de photodiodes rectangulaire et **en ce que** les moyens de déplacement relatif du premier et du deuxième dispositif de détection et de leur direction de déplacement relatif périodique sont formés par :

  - un châssis (F) sensiblement rectangulaire ;
  - des moyens (38) de liaison élastique de la matrice de photodiodes au châssis ; et
  - des moyens électro-mécaniques ($A_1$, $A_2$) permettant d'engendrer alternati-vement un déplacement périodique de la matrice de photodiodes ou de la lentille dans une première et une deuxième direction perpendiculaire au châssis.

**10.** Dispositif selon l'une des revendications 1 à 9, **caractérisé en ce que** celui-ci comprend une pluralité de dispositifs élémentaires selon l'une des revendications 1 à 8, chaque dispositif élémentaire comportant une lentille fixe ($L_1$, $L_2$, $L_3$) étant agencé sensiblement sur une surface sphérique comportant un centre commun, le centre commun constituant, pour ledit dispositif, le centre optique d'un angle de vision global élargi à l'ensemble des angles de vision global de chacun des dispositifs élémentaires pris ensemble.

**11.** Système de fixation visuelle et de poursuite fine d'une cible comportant au moins un bord contrasté présentant une zone de transition lumineuse sensiblement rectiligne dans une direction déterminée constitutive de ce bord contrasté, **caractérisé en ce qu'**il comporte au moins :

  - un dispositif de détection (DD) selon l'une quelconque des revendications 1 à 10 ;
  - un support mécanique (ET), dans lequel ledit dispositif de détection est susceptible d'être orienté ;
  - un moyen H(p) de mesure de la vitesse de rotation dudit support mécanique (ET) ;
  - un moyen de commande directe, en boucle ouverte, de l'orientation de la direction de référence dudit dispositif de détection, ce moyen de commande délivrant un signal de commande directe ($U_{VOR}$) à partir de la mesure de la vitesse de rotation dudit support mécanique (ET) ;
  - des moyens formant une boucle d'asservissement visuel de la direction de référence à la direction détectée d'au moins un bord contrasté appartenant à la cible ;
  - des moyens de fusion, par combinaison linéaire, dudit signal de commande directe ($U_{VOR}$) et du signal de commande d'asservissement visuel.

**12.** Système selon la revendication 11, **caractérisé en ce que** le moyen de commande directe de l'orientation de la direction de référence du dispositif de détection à partir de la vitesse de rotation du support mécanique comporte un correcteur ($C_{VOR}(p)$) apte à commander la direction de référence du dispositif de détection (DD) en opposition de phase et avec un gain sensiblement unitaire par rapport à la position angulaire dudit support mécanique (ET), de manière à compenser rapidement toute perturbation de rotation engendrée par le support mécanique (ET).

**13.** Système selon la revendication 11 ou 12, **caractérisé en ce que** les moyens formant une boucle d'asservissement visuel comportent au moins :

  - ledit dispositif de détection (DD),
  - un inverseur de polarité (Inv) du signal de sortie délivré par le dispositif de détection (DD) ;
  - une fonction de transfert non linéaire (ZSL) ;
  - un correcteur de boucle (Cv(p)).

**14.** Système de fixation visuelle et de poursuite fixe d'une cible selon l'une des revendications 11 à 13, **caractérisé en ce que** lesdits moyens de fusion sont formés par un soustracteur ($S_t$) recevant le signal de sortie délivré par le moyen de commande directe et le signal de commande d'asservissement.

**15.** Procédé de détection d'un bord contrasté (E) présentant une zone de transition lumineuse sensiblement rectiligne dans une direction déterminée, procédé déterminé à l'aide d'un dispositif conforme à l'une quelconque des revendications 1 à 10, **caractérisé en ce qu'**il consiste au moins à :

- effectuer, dans une autre direction transversale à cette direction déterminée, un balayage périodique de position de l'angle de vision global d'un premier et d'un deuxième capteur optique, par translation relative entre, d'un côté, ensemble formé par ce premier et ce deuxième capteur optique et, de l'autre côté, la lentille (L) dans cette autre direction ;
- mesurer l'écart temporel, à partir des signaux délivrés par le premier et le deuxième capteur optique, qui dépend de la position angulaire de cette zone de transition lumineuse, par rapport à une direction de référence, comprise dans cet angle de vision global, à partir de la loi de balayage, cette direction de référence étant liée à une valeur spécifique de cet écart temporel.

**Claims**

**1.** A device for detecting a contrast edge (E) having a substantially rectilinear luminous transition zone in a specified direction, said device comprising:

at least a first and a second optical sensor ($D_1$, $D_2$, $O_{11}$, $O_{12}$; $O_{21}$, $O_{22}$, $O_{31}$, $O_{32}$) having a global visual angle ($\Delta\varphi$) delimited by the average direction ($O_1OY_1$, $O_2OY_2$) of observation of said first and said second optical sensor, and

- a lens (L) having an optical centre (O), the first and the second optical sensor being placed substantially in the image focal plane of this lens and the average directions ($O_1OY_1$, $O_2OY_2$) of observation of the first and of the second optical sensor corresponding substantially to a line linking the centre of the first respectively of the second optical sensor and the optical centre (O) of this lens, said first and second optical sensors delivering detection signals, and
- means (2) for measuring, upon the basis of these detection signals, the time difference between these signals linked to the angular position of this luminous transition zone in relation to a reference direction within this global visual angle ($\Delta\varphi$) upon the basis of the sweep law, this reference direction being linked to a specific value of this time difference,
**characterised in that** said device further comprises:
- means for relative translation movement (1, A; $A_1$, $A_2$) either of the unit formed by the first and the second optical sensor in relation to the lens (L), or of the lens (L) in front of the unit formed by the first and the second optical sensor ($D_1$, $D_2$) in a different direction (S) transverse to this specified direction according to a periodic position sweep of the global visual angle ($\Delta\varphi$) according to a non-uniform periodic sweep law during at least part of each periodic sweep period.

**2.** The device according to Claim 1, **characterised in that** the first and the second optical sensors ($D_1$, $D_2$) are each formed by a photoelectric sensor.

**3.** The device according to Claim 1 or 2, **characterised in that** said means (1, A; $A_1$, $A_2$) for relative translation movement comprise, said lens (L) being fixed:

- a deformable support element (A) integrated, on the one hand, into said unit formed by the first and the second optical sensor ($D_1$, $D_2$), and on the other hand into a fixed reference mechanical support;
- means for applying, to said deformable support, a periodic movement control force making it possible to bring about a periodic translation movement in this other transverse direction (S) of the unit formed by the first and the second optical sensors ($D_1$, $D_2$) according to said sweep law in relation to said fixed reference mechanical support;
- means for measuring the linear position of the first and the second optical sensor or of the lens upon the basis of the deformation of the deformable support.

**4.** The device according to Claim 1 or 2, **characterised in that** said means for relative translation movement comprise, said unit formed by the first and the second optical sensor ($D_1$, $D_2$) being fixed:

- a deformable support element integrated, on the one hand, into this lens (L) and, on the other hand, into a fixed reference mechanical support;
- means for applying, to this support element, a periodic movement control force making it possible to bring about a periodic translation movement in this other direction of said lens, according to said sweep law, in relation to said fixed reference mechanical support.

5. The device according to Claim 3 or 4, **characterised in that** said means for applying a movement control force comprise at least:

- a sweep generator (10) delivering a sweep voltage;
- a forming circuit (11) receiving the sweep voltage and delivering an intermediate sweep control signal, in accordance with the non-uniform sweep law;
- an amplifying circuit (12), supplied with continuous voltage, controlled by said intermediate sweep control signal, and delivering a periodic movement control voltage;
- an electromechanical actuator $(A, A_1, A_2)$ sensitive to the periodic control voltage.

6. A device according to any of Claims 1 to 5, **characterised in that** said means for measuring the angular position of the luminous transition zone comprise at least:

- a separating amplifier (20) receiving the signals delivered by the first and the second optical sensor and delivering amplified signals;
- an elementary movement detector module (21) receiving said amplified signals, making it possible, upon the basis of said time delay and the non-uniform sweep law, to deliver a substantially linear function signal of the angular position of said luminous contrast zone in relation to said reference direction.

7. The device according to any of Claims 1 to 6, **characterised in that** the specified direction and the other direction transverse (S) to said specified direction are orthogonal.

8. The device according to any of Claims 1 to 7, **characterised in that** the latter further comprises means ($\mu$M; CC) for orientating the unit formed by the deformable support element, the lens or the unit of the first and second optical sensors and the fixed reference mechanical support, such as to orientate the direction of periodic translation movement of the lens or of the optical sensor unit in this other direction transverse to said specified direction of the substantially rectilinear luminous transition zone.

9. The device according to any of Claims 1 to 8, **characterised in that** the first and the second optical sensors are formed by a rectangular matrix of photodiodes and **in that** the means for relative movement of the first and the second detection device and for their direction of periodic relative movement are formed by:

- a substantially rectangular frame (F);
- means (38) for elastically joining the matrix of photodiodes to the frame; and
- electromechanical means $(A_1, A_2)$ making it possible to bring about alternately periodic movement of the matrix of photodiodes or of the lens in a first and a second direction perpendicular to the frame.

10. The device according to any of Claims 1 to 9, **characterised in that** the latter comprises a plurality of elementary devices according to any of Claims 1 to 8, each elementary device comprising a fixed lens $(L_1, L_2, L_3)$ being arranged substantially over a spherical surface comprising a common centre, the common centre constituting, for said device, the optical centre of a global visual angle widened to all of the global visual angles of each of the elementary devices taken together.

11. A system for the visual fixing and fine tracking of a target comprising at least one contrast edge having a substantially rectilinear luminous transition zone in a specified direction forming this contrast edge, **characterised in that** it comprises at least:

- a detection device (DD) according to any of Claims 1 to 10;
- a mechanical support (ET) wherein said detection device is capable of being orientated;
- a means H(p) for measuring the rotation speed of said mechanical support (ET);
- a direct control means, in open loop, for orientating the reference direction of said detection device, this control means delivering a direct control signal $(U_{VOR})$ upon the basis of the measurement of the rotation speed of said mechanical support (ET);

- means forming a visual servo control loop of the reference direction to the detected direction of at least one contrast edge belonging to the target;
- means for fusing, by linear combination, said direct control signal ($U_{VOR}$) and the visual servo control command signal.

**12.** The system according to Claim 11, **characterised in that** the direct control means for orientating the reference direction of the detection device upon the basis of the rotation speed of the mechanical support comprises a corrector ($C_{VOR}(p)$) able to control the reference direction of the detection device (DD) in phase opposition and with a substantially unitary gain in relation to the angular position of said mechanical support (ET) such as to rapidly compensate any rotation disruption brought about by the mechanical support (ET).

**13.** The system according to Claim 11 or 12, **characterised in that** the means forming a visual servo control loop comprise at least:

- said detection device (DD),
- a polarity inverter (Inv) of the output signal delivered by the detection device (DD);
- a non-linear transfer function (ZSL);
- a loop corrector (Cv(p)).

**14.** A system for the visual fixing and fixed tracking of a target according to any of Claims 11 to 13, **characterised in that** said fusion means are formed by a subtractor ($S_t$) receiving the output signal delivered by the direct control means and the servo control command signal.

**15.** A process for detecting a contrast edge (E) having a substantially rectilinear luminous transition zone in a specified direction , the method specified with the aid of a device according to any of Claims 1 to 10, **characterised in that** it consists at least of:

- executing, in a different direction transverse to this specified direction, periodic sweeping of the global visual angle position of a first and of a second optical sensor, by relative translation between, on the one hand, the unit formed by this first and this second optical sensor, and on the other hand, the lens (L) in this different direction;
- measuring the time difference, upon the basis of the signals delivered by the first and the second optical sensor, which depends upon the angular position of this luminous transition zone, in relation to a reference direction, included within this global visual angle, upon the basis of the sweep law, this reference direction being linked to a specific value of this time difference.

**Patentansprüche**

**1.** Vorrichtung zum Nachweisen einer Kontrastkante (E), die eine im Wesentlichen in einer vorgegebenen Richtung geradlinige Lichtübergangszone aufweist, wobei diese Vorrichtung Folgendes umfasst:

- wenigstens einen ersten und einen zweiten optischen Sensor ($D_1$, $D_2$, $O_{11}$, $O_{12}$; $O_{21}$, $O_{22}$, $O_{31}$, $O_{32}$), die einen Gesamtsichtwinkel ($\Delta\varphi$) aufweisen, der durch die mittlere Beobachtungsrichtung ($O_1OY_1$, $O_2OY_2$) dieses ersten und dieses zweiten optischen Sensors begrenzt wird, und
- eine Linse (L), die ein optisches Zentrum (O) aufweist, wobei der erste und zweite optische Sensor im Wesentlichen in der Bildbrennebene dieser Linse angebracht sind und die mittleren Beobachtungsrichtungen ($O_1OY_1$, $O_2OY_2$) des ersten und zweiten optischen Sensors im Wesentlichen einer Linie entsprechen, die den Mittelpunkt des ersten beziehungsweise zweiten optischen Sensors und den optischen Mittelpunkt (O) dieser Linse verbindet, wobei der erste und zweite optische Sensor Nachweissignale liefern, und Mittel (2) zum Messen ausgehend von diesen Nachweissignalen des Zeitunterschieds dieser Signale, der von der Winkelposition dieser Lichtübergangszone bezüglich einer in diesem Gesamtsichtwinkel ($\Delta\varphi$) enthaltenen Bezugsrichtung abhängt, gemäß der Abtastabfolge, wobei diese Bezugsrichtung mit einem spezifischen Wert dieses Zeitunterschieds verbunden ist,
- Mittel (1, A; $A_1$, $A_2$) zur relativen Linearverschiebung entweder der durch den ersten und zweiten optischen Sensor gebildeten Anordnung gegenüber der Linse (L) oder der Linse (L) vor der durch den ersten und zweiten optischen Sensor ($D_1$, $D_2$) gebildeten Anordnung in eine andere, zu dieser vorgegebenen Richtung querverlaufende Richtung (S) unter periodischem Abtasten der Position des Gesamtsichtwinkels ($\Delta\varphi$) entsprechend einer Abfolge des periodischen Abtastens, die für wenigstens einen Teil jeder Periode des periodischen Abtastens ungleichförmig ist.

**2.** Vorrichtung gemäß Anspruch 1, **dadurch gekennzeichnet, dass** der erste und zweite optische Sensor ($D_1$, $D_2$) jeweils durch einen photoelektrischen Sensor gebildet werden.

**3.** Vorrichtung gemäß Anspruch 1 oder 2, **dadurch gekennzeichnet, dass** wenn die Linse (L) stationär ist, die Mittel (1, A; $A_1$, $A_2$) zur relativen Linearverschiebung Folgendes umfassen:

- ein verformbares Trägerelement (A), das einerseits an die durch den ersten und zweiten optischen Sensor ($D_1$, $D_2$) gebildete Anordnung und andererseits an einen stationären mechanischen Bezugsträger angeformt ist;
- Mittel zum Ausüben einer Belastung auf den verformbaren Träger zum Steuern einer periodischen Verschiebung zum Bewirken einer periodischen Linearverschiebung in diese andere Querrichtung (S) der durch den ersten und zweiten optischen Sensor ($D_1$, $D_2$) gebildeten Anordnung gemäß dieser Abtastabfolge bezüglich des feststehenden mechanischen Bezugsträgers;
- Mittel zum Messen der Linearposition des ersten und zweiten optischen Sensors oder der Linse aus der Verformung des verformbaren Trägers.

**4.** Vorrichtung gemäß Anspruch 1 oder 2, **dadurch gekennzeichnet, dass**, wenn die durch den ersten und zweiten optischen Sensor ($D_1$, $D_2$) gebildete Anordnung stationär ist, die Mittel zur relativen Linearverschiebung Folgendes umfassen:

- ein verformbares Trägerelement, das einerseits an diese Linse (L) und andererseits an einen stationären mechanischen Bezugsträger angeformt ist;
- Mittel zum Ausüben einer Belastung zum Steuern einer periodischen Verschiebung auf dieses Trägerelement zum Bewirken einer periodischen Linearverschiebung in diese andere Richtung der Linse gemäß der Abtastabfolge bezüglich des stationären mechanischen Bezugsträgers.

**5.** Vorrichtung gemäß Anspruch 3 oder 4, **dadurch gekennzeichnet, dass** die Mittel zum Ausüben einer Belastung zum Steuern der Verschiebung wenigstens Folgendes umfassen:

- einen Abtastgenerator (10), der eine Abtastspannung liefert;
- eine Formungsschaltung (11), die die Abtastspannung empfängt und ein Abtaststeuerungszwischensignal gemäß der ungleichförmigen Abtastabfolge liefert;
- eine mit einer Dauerspannung gespeiste Verstärkungsschaltung (12), die durch das Abtaststeuerungszwischensignal gesteuert wird und eine Spannung zur periodischen Verschiebungssteuerung liefert;
- ein elektromechanisches Stellorgan (A, $A_1$, $A_2$), das auf die periodische Steuerspannung anspricht.

**6.** Vorrichtung gemäß einem der Ansprüche 1 bis 5, **dadurch gekennzeichnet, dass** die Mittel zum Messen der Winkelposition der Lichtübergangszone wenigstens Folgendes umfassen:

- einen Trennverstärker (20), der die von dem ersten und zweiten optischen Sensor gelieferten Signale empfängt und verstärkte Signale liefert;
- ein Einzelmodul (21) zum Bewegungsnachweis, das die verstärkten Signale empfängt, was auf der Grundlage des Zeitunterschieds und der ungleichförmigen Abtastabfolge das Liefern eines Signals ermöglicht, das im Wesentlichen linear von der Winkelposition der Lichtkontrastzone bezogen auf die Bezugsrichtung abhängt.

**7.** Vorrichtung gemäß einem der Ansprüche 1 bis 6, **dadurch gekennzeichnet, dass** die vorgegebene Richtung und die andere, zu der vorgegebenen Richtung querverlaufende Richtung (S) orthogonal sind.

**8.** Vorrichtung gemäß einem der Ansprüche 1 bis 7, **dadurch gekennzeichnet, dass** diese außerdem Mittel ($\mu$M; CC) zum Ausrichten der durch das verformbare Trägerelement, der Linse oder der Anordnung des ersten und zweiten optischen Sensors und dem stationären mechanischen Bezugsträger gebildeten Anordnung umfasst, um die Richtung der periodischen Linearverschiebung der Linse oder der Anordnung optischer Sensoren in diese andere Querrichtung zu der vorgegebenen Richtung der im Wesentlichen geradlinigen Lichtübergangszone auszurichten.

**9.** Vorrichtung gemäß einem der Ansprüche 1 bis 8, **dadurch gekennzeichnet, dass** der erste und zweite optische Sensor durch eine rechtwinklige Photodiodenmatrix gebildet werden, und **dadurch** dass die Mittel zur relativen Verschiebung der ersten und zweiten Nachweisvorrichtung und ihrer Richtung der periodischen relativen Verschiebung durch Folgendes gebildet werden:

- einen im Wesentlichen rechteckigen Rahmen (F);
- Mittel (38) zur elastischen Verbindung der Photodiodenmatrix mit dem Rahmen und
- elektromechanische Mittel ($A_1$, $A_2$) zum alternierenden Bewirken einer periodischen Verschiebung der Photodiodenmatrix oder der Linse in einer ersten und zweiten, zum Rahmen senkrechten Richtung.

10. Vorrichtung gemäß einem der Ansprüche 1 bis 9, **dadurch gekennzeichnet, dass** diese eine Mehrzahl Einzelvorrichtungen gemäß einem der Ansprüche 1 bis 8 umfasst, wobei jede Einzelvorrichtung eine stationäre Linse ($L_1$, $L_2$, $L_3$) umfasst, die im Wesentlichen auf einer Kugelfläche angeordnet ist, die einen gemeinsamen Mittelpunkt umfasst, wobei der gemeinsame Mittelpunkt im Fall dieser Vorrichtung den optischen Mittelpunkt eines Gesamtsichtwinkels darstellt, der auf alle Gesamtsichtwinkel jeder zusammen genommenen Einzelvorrichtung verbreitert ist.

11. System zum visuellen Fixieren und genauen Verfolgen eines Ziels, das wenigstens eine Kontrastkante umfasst, die eine im Wesentlichen in einer diese Kontrastkante darstellenden, vorgegebenen Richtung geradlinige Lichtübergangszone aufweist, **dadurch gekennzeichnet, dass** es wenigstens Folgendes umfasst:

- eine Nachweisvorrichtung (DD) gemäß einem der Ansprüche 1 bis 10;
- einen mechanischen Träger (ET), bei dem die Nachweisvorrichtung ausgerichtet werden kann;
- ein Mittel H(p) zum Messen der Umdrehungsgeschwindigkeit des mechanischen Trägers (ET);
- ein Mittel zur direkten Steuerung mit offenem Regelkreis der Ausrichtung der Bezugsrichtung der Nachweisvorrichtung, wobei dieses Steuermittel ein direktes Steuersignal ($U_{VOR}$) aus der Messung der Umdrehungsgeschwindigkeit des mechanischen Trägers (ET) liefert;
- Mittel zum Bilden eines visuellen Regelkreises der Bezugsrichtung zur ermittelten Richtung wenigstens einer dem Ziel zugehörigen Kontrastkante;
- Mittel zum Zusammenführen des direkten Steuersignals ($U_{VOR}$) und des visuellen Regelsignals durch lineare Kombination.

12. System gemäß Anspruch 11, **dadurch gekennzeichnet, dass** das Mittel zur direkten Steuerung zur Ausrichtung der Bezugsrichtung der Nachweisvorrichtung ausgehend von der Umdrehungsgeschwindigkeit des mechanischen Trägers einen Korrektor ($C_{VOR}(p)$) umfasst, der die Bezugsrichtung der Nachweisvorrichtung (DD) in Gegenphase und mit einer Verstärkung von im Wesentlichen eins bezüglich der Winkelposition des mechanischen Trägers (ET) zu steuern vermag, um so jegliche durch den mechanischen Träger (ET) erzeugte Störung der Umdrehung rasch zu kompensieren.

13. System gemäß Anspruch 11 oder 12, **dadurch gekennzeichnet, dass** die einen visuellen Regelkreis bildenden Elemente wenigstens Folgendes umfassen:

- die besagte Nachweisvorrichtung (DD);
- einen Polwechselschalter (Inv) für das von der Nachweisvorrichtung (DD) gelieferte Ausgangssignal;
- eine Funktion zum nichtlinearen Transfer (ZSL);
- ein Korrekturglied (Cv(p)).

14. System zum visuellen Fixieren und stationären Verfolgen eines Ziels gemäß einem der Ansprüche 11 bis 13, **dadurch gekennzeichnet, dass** die Mittel zum Zusammenführen durch ein Subtrahierglied ($S_t$) gebildet werden, das das von dem Mittel zur direkten Steuerung gelieferte Ausgangssignal und das Regelkreissignal empfängt.

15. Verfahren zum Nachweis einer Kontrastkante (E), die eine im Wesentlichen geradlinige Lichtübergangszone in einer vorbestimmten Richtung aufweist, mit Hilfe einer Vorrichtung gemäß einem der Ansprüche 1 bis 10, **dadurch gekennzeichnet, dass** es wenigstens aus Folgendem besteht:

- Ausführen einer periodischen Abtastung der Position des Gesamtsichtwinkels eines ersten und eines zweiten optischen Sensors in einer anderen, zu dieser vorgegebenen Richtung querverlaufenden Richtung durch relative Linearverschiebung zwischen der durch diesen ersten und zweiten optischen Sensor gebildeten Anordnung einerseits und der Linse (L) in dieser anderen Richtung andererseits;
- Messen des Zeitunterschieds aus von den von dem ersten und zweiten optischen Sensor gelieferten Signalen, der von der Winkelposition dieser Lichtübergangszone bezüglich einer von diesem Gesamtsichtwinkel umfassten Bezugsrichtung auf der Grundlage der Abtastabfolge, wobei diese Bezugsrichtung mit einem spezifischen Wert dieses Zeitunterschieds verbunden ist.

**FIG.1**

**FIG.3a**

**FIG.2a**

**FIG.2b**

**FIG.2c**

**FIG.2d**

**FIG.2e**

**FIG.2f**

**FIG.2g**

**FIG.2h**

*FIG.4a*

*FIG.4d*

*FIG.4c*

*FIG.3b*

Position angulaire(°) du bord contrasté E par rapport à la direction de visée $MOY_{12}$

*FIG.4b*

**FIG.4e**

**FIG.5b**

**FIG.5a**

**FIG.6a**

**FIG.6b**

**FIG.7a**

**FIG.7b**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Stéphane VIOLLET ; Nicolas FRANCESCHINI.** Visual Servo System based on a biologically-inspired Scanning Sensor. CNRS Laboratoire de Neurobiologie, Septembre 1999, vol. 3839